(19) Europäisches Patentamt
European Patent Office
Office européen des brevets

(11) **EP 3 628 609 A1**

(12) **EUROPÄISCHE PATENTANMELDUNG**

(43) Veröffentlichungstag:
**01.04.2020  Patentblatt 2020/14**

(51) Int Cl.:
**B65G 43/00** *(2006.01)*    *B65G 23/32* *(2006.01)*
**B65G 43/04** *(2006.01)*

(21) Anmeldenummer: **18197707.5**

(22) Anmeldetag: **28.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Gürer, Fuat**
  **91056 Erlangen (DE)**
• **Hellmuth, Torsten**
  **91058 Erlangen (DE)**
• **Mächler, Peter**
  **91301 Forchheim (DE)**
• **Stark, Peter**
  **95448 Bayreuth (DE)**

(54) **VERFAHREN ZUR REGELUNG EINER BEWEGUNG EINER ANTRIEBSROLLE, STEUEREINRICHTUNG, ANTRIEBSSYSTEM, GURTFÖRDEREINRICHTUNG UND COMPUTERPROGRAMMPRODUKT**

(57)    Die Erfindung betrifft ein Verfahren zur Regelung einer Bewegung einer Antriebsrolle (5), eine Steuereinrichtung (13), ein Antriebssystem, eine Gurtfördereinrichtung (1) sowie ein Computerprogrammprodukt. Das Verfahren dient zur Steuerung oder Regelung eines Schlupfes (S) zwischen einer Antriebsrolle (5) und einem Gurt (3). Vorzugsweise wird eine Kennlinie (K) ermittelt, welche die Abhängigkeit der auf den Gurt (3) übertragenen Kraft (F) in Abhängigkeit von dem Schlupf (S) angibt. Vorzugsweise wird der Schlupf (S) anhand der Kennlinie (K) gesteuert oder geregelt. Zur Verbesserung der Regelung erfolgt eine Regelung auf einen Regelungspunkt (RP) für den Schlupf (S). Darüber hinaus kann die Kennlinie (K) durch eine Variation (Var) des Schlupfes (S) einer sich ändernden Beladung des Gurtes (3) angepasst werden, indem der Schlupf (S) variiert wird, anhand der Variation (Var) ein Bereich der Kennlinie (K) durch eine Tangente (T) approximiert wird und die Tangente (T) zur Regelung des Schlupfes (S) herangezogen wird.

FIG 1

EP 3 628 609 A1

**Beschreibung**

Die Erfindung betrifft ein Verfahren zur Regelung einer Bewegung einer Antriebsrolle, eine Steuereinrichtung, ein Antriebssystem, eine Gurtfördereinrichtung und ein Computerprogrammprodukt.

Gurtfördereinrichtungen finden vielfach im Bereich des Bergbaus Verwendung. In der Regel weisen Gurtfördereinrichtungen eine angetriebene Gurttrommel auf, wobei die Gurttrommel mit einem (Elektro-) Motor angetrieben wird.

Der Motor ist anhand der Länge und der Menge des zu transportierenden Schüttgutes auszulegen. Eine Erweiterung einer bestehenden Gurtfördereinrichtung ist technisch aufwändig, da in der Regel der Motor an der Gurttrommel durch einen leistungsfähigeren Motor ersetzt werden muss.

Zur Schonung des Gurtes ist daher bekannt, zusätzlich zur Gurttrommel weitere Tragrollen anzutreiben. Durch den Antrieb weiterer Tragrollen können der Motor der Gurttrommel und der Gurt entlastet werden. Eine solche Ausführung ist beispielhaft in DE 10 2012 102 945 A1 offenbart.

Problematisch ist jedoch die Steuerung der Drehzahl der jeweiligen Tragrolle, da die Drehzahl der jeweiligen Tragrolle an die lokale Geschwindigkeit des Gurtes angepasst werden muss. Eine solche Anpassung ist in der noch nicht veröffentlichten EP-Anmeldung 18156029.3 (Anmelder: Siemens AG) thematisiert.

Die Steuerung der Drehzahlen und/oder der Drehmomente der einzelnen Tragrollen ist jedoch aufwendig. Nachteilig sind die Drehzahlen und/oder die Drehmomente einzelner Antriebe oder Antriebssysteme durch einen leicht elastischen Gurt gekoppelt.

Demnach ist es Aufgabe der Erfindung, ein Antriebssystem für eine Gurtfördereinrichtung zu verbessern.

Die Aufgabe wird durch ein Verfahren gemäß Anspruch 1 gelöst. Weiter wird die Aufgabe durch eine Steuereinrichtung nach Anspruch 10 gelöst. Darüber hinaus wird die Aufgabe durch ein Antriebssystem nach Anspruch 11, ein Computerprogramm nach Anspruch 12 sowie durch eine Gurtfördereinrichtung nach Anspruch 13 gelöst.

Vorteilhafte Weiterbildungen und Ausführungen der Erfindung sind jeweils Gegenstand der abhängigen Ansprüche.

Ein Aspekt der Erfindung ist es überdies, das Antriebssystem derart zu verbessern, dass er autark von jeweils anderen Antrieben einer Gurtfördereinrichtung funktionieren kann.

Der Erfindung liegt insbesondere die Idee zu Grunde, dass eine Gurtfördereinrichtung mehrere Antriebssysteme für mehrere Antriebsrollen umfassen kann.

In der Regel umfasst eine Gurtfördereinrichtung einen Gurt, wobei der Gurt mit einer Mehrzahl von Rollen gespannt und gehalten wird. Ein Teil der Rollen sind als Antriebsrollen ausgebildet. Die Antriebsrollen sind jeweils mit einem Motor verbunden, wobei die Antriebsrollen zum Antrieb des Gurtes vorgesehen sind. Eine Antriebsrolle kann als Tragrolle oder als Gurttrommel ausgebildet sein.

Die Antriebsrollen dienen zur Übertragung einer Kraft auf den Gurt. Die Kraft ist proportional zum Drehmoment, welches vom Motor auf die Antriebsrollen aufgeprägt wird.

Vorzugsweise umfasst die Gurtfördereinrichtung eine Mehrzahl von Antriebssystemen, wobei das jeweilige Antriebssystem zum Antrieb einer Antriebsrolle ausgebildet ist.

Vorteilhaft umfasst das jeweilige Antriebssystem einen Motor, der mit der jeweiligen Antriebsrolle gekoppelt ist. Darüber hinaus umfasst das jeweilige Antriebssystem eine Steuereinrichtung und eine Stromversorgung für den Motor. Die Stromversorgung ist vorzugsweise als Frequenzumrichter ausgebildet. Vorteilhaft umfasst die Steuereinrichtung eine Regeleinrichtung, wobei die Regeleinrichtung zur Regelung der Drehzahl und/oder zur Regelung des Drehmoments des Motors ausgebildet ist. Die Regelung der Drehzahl kann auch mit Hilfe einer Schlupf-Regeleinrichtung erfolgen.

Die Regeleinrichtung ist vorteilhaft zweiteilig ausgebildet. Die Regeleinrichtung umfasst vorteilhaft eine Schlupf-Regeleinrichtung und eine Drehzahl-Regeleinrichtung. Vorteilhaft stellt die Schlupf-Regeleinrichtung eine Soll-Drehzahl für die Drehzahl-Regeleinrichtung bereit. Die Drehzahl-Regeleinrichtung ist vorteilhaft in der Stromversorgung für den jeweiligen Motor integriert.

Um die jeweilige Antriebseinheit autark zu betreiben, muss sich die Drehzahl einer Gurtantriebsrolle an die lokale Geschwindigkeit des Gurtes der Gurtfördereinrichtung anpassen.

Die Erfindung gründet insbesondere auf der Feststellung, dass zur Übertragung einer Kraft von einer Antriebsrolle auf einen Gurt ein Schlupf zwischen der Mantelfläche des Gurtes und dem Gurt vorliegen sollte. Für einen kleinen Schlupf, insbesondere einem Schlupf kleiner als 1%, gilt: ein höherer Schlupf resultiert in einem größeren Übertrag von Kraft auf den Gurt.

Zur Übertragung einer Kraft von der Antriebsrolle auf den Gurt ist ein Schlupf zwischen einer Mantelfläche der Antriebsrolle und dem Gurt vorteilhaft. Der Schlupf $S$ ist vorteilhaft proportional zur Differenz aus der Tangentialgeschwindigkeit $v\_t$ der Antriebsrolle und der Geschwindigkeit $v$ des Gurtes. Die Tangentialgeschwindigkeit ist die Geschwindigkeit eines Punktes auf der Mantelfläche der Antriebsrolle. Eine mögliche Definition des Schlupfes $S$ ist somit

$$S := \frac{v - v\_t}{v}$$

Der Schlupf ist vorzugsweise gemäß einer vorgebbaren Kraft einstellbar, wobei die Kraft von der angetriebenen Gurtantriebsrolle auf den Gurt wirkt. Vorteilhaft ist der Schlupf von 0% bis 5%, insbesondere von 0,1% bis 1%, einstellbar. Der vorteilhafte Bereich des Schlupfes ist von der Gurtfördereinrichtung abhängig. Ein vorteilhafter Wertebereich ist jedoch je nach Aufbau und Wirkweise einer Gurtfördereinrichtung unterschiedlich.

Vorzugsweise erfolgt die Bestimmung der Geschwindigkeit des Gurtes mit Hilfe eines Sensors. Der Sensor stellt die Geschwindigkeit des Gurtes einer Steuereinrichtung bereit.

Das Verfahren zur Regelung einer Bewegung einer Antriebsrolle, insbesondere einer Antriebsrolle einer Gurtfördereinrichtung, umfasst die folgenden Schritte:

- Ermitteln einer Geschwindigkeit eines Gurtes,
- Vorgabe eines Schlupfes zwischen der Antriebsrolle und dem Gurt,
- Vorgabe einer Soll-Drehzahl an eine Drehzahl-Regeleinrichutng für die Antriebsrolle anhand des Schlupfes,

wobei der Schlupf anhand einer Kraft, die auf den Gurt wirken soll, bestimmt wird.

Die Kraft wird vorzugsweise von einem Benutzer vorgegeben. Unter der Kraft wird diejenige Kraft verstanden, mit welcher die Antriebsrolle an dem Gurt zieht.

Die Antriebsrolle dient zur Aufprägung einer Kraft auf den Gurt in tangentialer Richtung zur Mantelfläche der Antriebsrolle. Die Kraft, welche die Antriebsrolle auf den Gurt aufprägt, entspricht dem Produkt des Drehmoments D multipliziert mit dem Radius der Mantelfläche der Antriebsrolle.

Die Antriebsrolle dient vorzugsweise zum Antrieb des Gurtes. Die Antriebsrolle ist vorzugsweise mit einem Motor verbunden. Der Motor ist vorzugsweise mit einer Stromversorgung verbunden, wobei die Stromversorgung vorteilhaft als Frequenzumrichter ausgebildet ist.

Der Motor stellt das Drehmoment zur Übertragung der Kraft durch den Motor bereit.

Die Soll-Drehzahl wird vorzugsweise von einer Schlupf-Regeleinrichtung bereitgestellt. Die Schlupf-Regeleinrichtung dient zur Regelung des Schlupfes anhand der Kraft.

Der Schlupf kann mit Hilfe des Sensors für die Geschwindigkeit des Gurtes und mit einem Geber zur Bestimmung der Drehzahl der Antriebsrolle bestimmt werden. Der während des Betriebs ermittelte Schlupf wird der Schlupf-Regeleinrichtung bereitgestellt. Die Schlupf-Regeleinrichtung regelt den Schlupf anhand der vorgegeben Kraft. Die Kraft ist jeweils einem Wert für den Schlupf zugeordnet.

Die Bestimmung des Schlupfes erfolgt vorzugsweise mit Hilfe einer Recheneinheit, wobei die Recheneinheit einer Steuereinrichtung zugeordnet ist. Der Schlupf wird vorzugsweise der Schlupf-Regeleinrichtung als Soll-Wert bereitgestellt.

Die Schlupf-Regeleinrichtung stellt vorzugsweise die Soll-Drehzahl an die Drehzahl-Regeleinrichtung bereit.

Der Schlupf wird der Drehzahl-Regeleinrichtung bereitgestellt. Die Drehzahl-Regeleinrichtung dient zur Regelung der Drehzahl des Motors und damit der Drehzahl der Antriebsrolle.

Durch die Regelung des Schlupfes anstelle einer direkten Regelung der Drehzahl des Antriebs kann einfach die Kraft eingestellt werden, die auf den Gurt wirkt.

Insbesondere durch die Regelung des Schlupfes, und damit der Einstellung der Drehzahl, kann der Motor besonders einfach in Bezug zur Drehzahl und/oder des Drehmoments eingestellt werden.

Durch die Regelung des Schlupfes kann eine besonders lineare Regelung erfolgen.

Durch das Verfahren kann ein besonders einfacher und effizienter Antrieb des Gurtes erfolgen. Insbesondere aufgrund der einfachen Regelung der Drehzahl des Motors kann ein solcher Antrieb autark betrieben werden.

Bei einer vorteilhaften Ausgestaltung der Erfindung ist der Schlupf als Funktion der Kraft in einer Kennlinie festgelegt.

Die Kennlinie wird vorteilhaft experimentell und/oder mit Hilfe einer Simulation der Gurtfördereinrichtung bestimmt. Je nach Beladungszustand können unterschiedliche Kennlinien ermittelt werden.

Die Kennlinie gibt vorzugsweise die Kraft oder das Drehmoment als Funktion des Schlupfes an. Bei einer konstanten Geschwindigkeit kann die Kraft oder das Drehmoment als Funktion der Drehzahl angegeben werden.

Eine Kennlinie kann für einen geringen Schlupf einen linearen Anstieg der übertragenen Kraft auf den Gurt aufweisen. Bei einem hohen Schlupf nimmt die auf den Gurt übertragene Kraft nur noch geringfügig zu oder sogar ab. Überschreitet der Schlupf einen maximalen Wert, rutscht die Mantelfläche lediglich an einer Unterseite des Gurtes entlang, ohne dass eine nennenswerte Kraft auf den Gurt übertragen wird. Demnach besteht nur eine schwache Reibung zwischen der Mantelfläche der Antriebsrolle und dem Gurt. Die Übertragung der Kraft von der Antriebsrolle auf den Gurt ist demnach begrenzt.

Vorzugsweise wird eine Mehrzahl von Kennlinien ermittelt. Je nach Beladungszustand der Gurtfördereinrichtung wird eine entsprechende Kennlinie ausgewählt und vorteilhaft der Schlupf-Regeleinrichtung bereitgestellt.

Durch die Bestimmung der Kennlinien kann die Regelung des Schlupfes in einfacher Art und Weise erfolgen.

In einer weiteren vorteilhafte Ausgestaltung der Erfindung wird die Soll-Drehzahl mit einer Drehzahldifferenz addiert und der Drehzahl-Regeleinrichtung bereitgestellt, wobei anhand der Kraftdifferenz, die aufgrund der Drehzahldifferenz ermittelt wird, ein Anstieg ermittelt wird.

Die Drehzahldifferenz beträgt vorzugsweise 1% bis 5% der Drehzahl des Motors. Die Drehzahldifferenz kann auch eine negative Größe darstellen. Der Drehzahl-Regelung des Motors wird die Summe der Drehzahl und der Drehzahldifferenz als neue Soll-Drehzahl bereitgestellt.

Bei Bereitstellung der um die Drehzahldifferenz erhöhten oder verminderten Solldrehzahl wird der Schlupf erhöht oder vermindert. Der veränderte Schlupf hat eine Veränderung der Kraft zur Folge, welche auf den Gurt wirkt.

Darüber hinaus verändert sich das Drehmoment, das der Motor aufbringen muss, um die erhöhte oder verminderte Drehzahl einzustellen.

Die Kraft oder das Drehmoment wird vorzugsweise mit einem Sensor ermittelt und die Kraftdifferenz bestimmt.

Durch die Erhöhung oder Verminderung der Drehzahl erfolgt eine Änderung des vorliegenden Schlupfes zwischen der Antriebsrolle und dem Gurt.

Vorzugsweise wird nach Einstellung der neuen Soll-Drehzahl der Antriebsrolle die Kraft auf den Gurt bestimmt. Die Bestimmung der Kraft auf den Gurt erfolgt vorzugsweise durch die Bestimmung des Drehmoments, welches am Motor anliegt.

Der Zusammenhang der Kraft F und des Drehmoments D ergibt sich über den Radius r der Mantelfläche der Antriebsrolle: $D = r \cdot F \Rightarrow F = D/r$. Das anliegende Drehmoment kann durch den Strom bestimmt werden, der dem Motor bereitgestellt wird.

Durch die Bestimmung der Schlupf-Differenz $\Delta S$ und der KraftDifferenz $\Delta F$ kann der Anstieg als $dF/dS = \Delta F/\Delta S$ bestimmt werden. Der Anstieg ist also der Quotient der Änderung der Kraft, die auf den Gurt wirkt bei einer Änderung des Schlupfes. Der Anstieg ist proportional zur Änderung des Drehmoments bei einer Änderung des Schlupfes oder einer Änderung des Drehmoments bei einer Änderung der Drehzahl. Vorzugsweise erfolgt eine Regelung des Schlupfes oder der Drehzahl anhand des bestimmten Anstieges.

Vorzugsweise erfolgt die Bestimmung des Anstieges in regelmäßigen Zeitabständen, beispielsweise alle zehn Minuten oder jede Stunde.

Vorteilhaft werden der jeweilige Anstieg und/oder die Tangente der Schlupf-Regeleinrichtung bereitgestellt. Die Schlupf-Regeleinrichtung kann insbesondere anhand der Tangente den Schlupf linear regeln. Die Tangente dient vorteilhaft zur Vorgabe des Sollwertes des Schlupfes für die Schlupf-Regeleinrichtung.

Vorzugsweise erfolgt eine Bestimmung des Anstieges bei einer Änderung der Beladung der Gurtfördereinrichtung.

Der Anstieg gibt vorzugsweise die Steigung der Tangente vor. Die Tangente ist vorzugsweise eine lineare Approximation der Kennlinie, wobei vorteilhaft die Tangente sich jeweils der Beladung des Gurtes anpasst.

Durch die Bestimmung des Anstieges erfolgt vorzugsweise eine verbesserte Regelung des Schlupfes. Insbesondere durch die Regelung des Schlupfes anhand der Tangente kann eine besonders stabile und einfache Regelung des Schlupfes erfolgen.

Bei einer weiteren vorteilhaften Ausgestaltung der Erfindung dient der Anstieg, insbesondere als Tangente, zur Regelgröße für den Schlupf.

Die Tangente ist eine lineare Approximation des Anstieges. Die Tangente wird vorzugsweise der Schlupf-Regeleinrichtung bereitgestellt. Die Tangente ist eine lineare Approximation des Anstieges der auf den Gurt übertragenen Kraft bei einem ansteigenden Schlupf bzw. einer ansteigenden Drehzahl.

Durch die Tangente kann eine lineare Regelung des Schlupfes mit Hilfe der Schlupf-Regeleinrichtung erfolgen.

Alternativ oder zusätzlich kann die Tangente der Drehzahl-Regeleinrichtung bereitgestellt werden. Durch die Tangente kann vorteilhaft eine lineare Regelung der Drehzahl oder des Schlupfes erfolgen.

Eine Regelung des Schlupfes und/oder eine Regelung der Drehzahl erfolgt vorzugsweise durch eine P-, eine PI- oder eine PID-Regelung. Demnach sind die Schlupf-Regeleinrichtung und/oder die Drehzahl-Regeleinrichtung als P-Regelkreis, als PI-Regelkreis oder als PID-Regelkreis ausgebildet.

Vorzugsweise kann eine Mehrzahl von Tangenten bestimmt werden, indem unterschiedliche Werte für eine Drehzahldifferenz an die Drehzahl-Regeleinrichtung bereitgestellt werden. Vorzugsweise wird mit der Mehrzahl von Tangenten eine Kennlinie zur Bereitstellung für den Schlupf-Regelkreis bereitgestellt.

Vorzugsweise erfolgt eine Mittelung der jeweils ermittelten Anstiege. Durch eine solche Mittelung kann die Genauigkeit der Schlupf-Regeleinrichtung und/oder der Drehzahl-Regeleinrichtung erhöht werden.

Durch eine Mehrzahl von Tangenten bei jeweils unterschiedlichen Schlupf-Werten oder unterschiedlichen Drehzahlen kann ein Teil der Kennlinie approximativ nachgebildet werden.

Eine solche Nachbildung der Kennlinie dient zur Berücksichtigung unterschiedlicher Beladungszustände der Gurtfördereinrichtung.

Der Beladungszustand der Gurtfördereinrichtung kann durch eine Messeinrichtung, beispielhaft eine Bandwaage, festgestellt werden. Je nach ermittelter Beladung des Gurtes kann eine entsprechende Kennlinie an die Schlupf-Regeleinrichtung und/oder an die Drehzahl-Regeleinrichtung bereitgestellt werden.

Vorzugsweise wird als Funktion des Beladungszustandes eine entsprechende Kennlinie, ein entsprechender Anstieg oder eine entsprechende Tangente ausgewählt und der Schlupf-Regelung bereitgestellt.

Durch die Regelung des Schlupfes auf den Anstieg ist vorteilhaft eine, dem Beladungszustand angepasste, Regelung möglich.

In einer vorteilhaften Ausgestaltung der Erfindung wird ein Schlupf von 0% bis 5%, insbesondere ein Schlupf von 0,1% bis 1%, vorzugsweise 0,1% bis 0,5%, gewählt. Die genannten Schlupf-Werte sind jedoch von der Gurtfördereinrichtung abhängig.

Vorteilhaft wird der Schlupf in diesem Wertebereich nach Ablauf der Anlaufphase gewählt und im Anschluss durch den jeweiligen Antrieb geändert.

Vorzugsweise wird zum Anfang der Betriebszeit, insbesondere während der Anlaufphase, ein Schlupf eingestellt, bei dem eine maximale Kraft auf den Gurt übertragen werden kann. Ein solcher Schlupf kann rein beispielhaft im Bereich um 0,5% eingestellt sein. Nach Erreichen einer weitgehend konstanten Geschwindigkeit des Gurtes erfolgt eine Variation des Schlupfes und/oder der Drehzahl. Vorzugsweise erfolgt eine Variation des Schlupfes und/oder der Drehzahl in regelmäßigen Zeitabständen.

Vorzugsweise wird während des Betriebes des Gurtförderers der Schlupf derart eingestellt, dass die Geschwindigkeit des Gurtes im Wesentlichen konstant ist.

Durch eine Wahl des Schlupfes in dem vorgenannten Bereich kann eine Belastung des Gurtes vorteilhaft vermieden werden.

Bei einer weiteren vorteilhaften Ausgestaltung der Erfindung erfolgt eine Regelung des Schlupfes anhand einer tangentialen Approximation des Anstieges.

Durch jeweils eine tangentiale Approximation mehrerer Bereiche der Kennlinie kann eine, zumindest bereichsweise modifizierte, Kennlinie bereitgestellt werden. Die modifizierte Kennlinie ist vorzugsweise eine Kennlinie, welche der aktuellen Beladung des Gurtes angepasst ist. Als tangentiale Approximation dient vorzugsweise die Tangente oder eine Schar von Tangenten für unterschiedliche Schlupf-Werte.

Eine tangentiale Approximation des Anstieges dient vorzugsweise einer linearen Regelung des Schlupfes und/oder einer linearen Regelung der Drehzahl.

Bei einer weiteren vorteilhaften Ausgestaltung der Erfindung wird die Drehzahl und/oder der Schlupf reduziert, falls der Anstieg einen negativen Wert annimmt.

Bei einem negativen Anstieg führt eine Erhöhung des Schlupfes zu einer Verminderung der Kraft, welche auf den Gurt übertragen wird. Demnach kann davon ausgegangen werden, dass der Schlupf zu hoch ist.

Bei Feststellung eines solchen negativen Anstieges erfolgt demnach eine Reduktion des Schlupfes. Insbesondere eine Verminderung der Drehzahl des Motors führt zu einer Verminderung des Schlupfes. Vorteilhaft wird bei Feststellung eines negativen Schlupfes eine verminderte Soll-Drehzahl an die Drehzahl-Regeleinrichtung bereitgestellt.

Durch die Prüfung auf einen negativen Anstieg wird der Gurt vorteilhaft geschont.

Bei einer weiteren vorteilhaften Ausgestaltung der Erfindung erfolgt eine Regelung des Schlupfes erst nach einer Anlaufphase, insbesondere nach dem die Geschwindigkeit des Gurtes einen konstanten Wert oder einen im Wesentlichen konstanten Wert erreicht hat.

Bei der Anlaufphase der Gurtfördereinrichtung wird vorzugsweise die Drehzahl des jeweiligen Motors in einer vorgebbaren Zeit auf eine Drehzahl erhöht, die etwa der Drehzahl entspricht, bei der kein Schlupf auftritt. Während der Anlaufphase erfolgt vorzugsweise lediglich eine Steuerung der Drehzahl des jeweiligen Antriebs.

Nachdem die Geschwindigkeit etwa derjenigen Geschwindigkeit entspricht, welche der Gurt im regulären Betrieb haben soll, wird vorzugsweise die Schlupf-Regeleinrichtung aktiviert.

Durch die Aktivierung der jeweiligen Regeleinrichtung während des Betriebes können größere Ungenauigkeiten bei der Regelung des Schlupfes oder der Drehzahl vorteilhaft verhindert werden.

Bei einer weiteren vorteilhaften Ausgestaltung der Erfindung wird anhand der Bestimmung des Anstieges die Kennlinie modifiziert.

Insbesondere durch eine regelmäßige Bestimmung des Anstieges kann vorteilhaft festgestellt werden, ob die Kennlinie, entsprechend der Beladung der Gurtfördereinrichtung, mit dem ermittelten Anstieg übereinstimmt.

Vorzugsweise wird bei Feststellung, dass der Anstieg der verwendeten Kennlinie von dem ermittelten Anstieg abweicht, die Kennlinie modifiziert oder eine andere Kennlinie ausgewählt. Der veränderte Anstieg, die sich daraus ergebende veränderte Tangente oder die veränderte Kennlinie wird vorteilhaft der Schlupf-Regeleinrichtung bereitgestellt.

Die Modifikation der Kennlinie erfolgt vorzugsweise bereichsweise durch eine vorstehend beschriebene Approximation der Kennlinie mittels zumindest einer Tangente.

Vorzugsweise erfolgt die Modifikation der Kennlinie, insofern ein neu ermittelter Anstieg oder eine neu ermittelte Tangente vorliegt.

Durch die Modifikation der Kennlinie oder durch ein Ersetzen der Kennlinie durch eine weitere Kennlinie kann vorteilhaft die Regelung der jeweiligen Beladung des Gurtförderers angepasst werden.

Die Anlaufphase kann durch eine zunehmende Geschwindigkeit des Gurtes gekennzeichnet werden. Vorzugsweise erfolgt eine Aktivierung der Schlupf-Regeleinrichtung erst dann, wenn die Drehzahl-Regeleinrichtung nur noch eine geringe Abweichung in die positive und negative Richtung der Drehzahl feststellt.

Nach Ablauf der Anlaufphase erfolgt vorzugsweise eine Regelung des Schlupfes. Der Schlupf wird entsprechend der Kraft, welche auf den Gurt wirken soll, mit Hilfe der Schlupf-Regeleinrichtung geregelt. Die Schlupf-Regeleinrichtung stellt vorteilhaft Drehzahlwerte für die Drehzahl-Regeleinrichtung bereit.

Durch die Aktivierung der Schlupf-Regeleinrichtung nach der Anlaufphase der Gurtfördereinrichtung erfolgt vorteilhaft eine schnelle und genaue Regelung des Schlupfes. Eine schnelle Regelung des Schlupfes führt zu einer stabilen Funktion der Drehzahl-Regeleinrichtung.

Vorzugsweise erfolgt in einem ersten Verfahrensschritt eine Bestimmung einer Kennlinie oder mehrerer Kennlinien entsprechend der Beladung des Gurtes der Gurtfördereinrichtung.

Vorzugsweise erfolgt in einem zweiten Schritt eine Vorgabe eines Drehmoments oder einer Kraft, welche auf den Gurt aufgeprägt werden soll. Die Kraft wird vorzugsweise von einem Benutzer vorgegeben. Die Kraft ist vorzugsweise derart auszuwählen, dass die Gurtfördereinrichtung einen möglichst gleichmäßigen Betrieb aufrecht erhält. Vorteilhaft gleicht die Kraft die Reibungseffekte aus. Darüber hinaus dient die Kraft zur Überwindung eines Höhen-Unterschiedes des Schüttgutes.

Vorzugsweise wird anhand der Kennlinie, des Anstieges oder der jeweiligen Tangente ein Schlupf der Schlupf-Regeleinrichtung vorgegeben.

Vorzugsweise erfolgt in einem weiteren Schritt eine Regelung des Schlupfes, wobei die Schlupf-Regeleinrichtung Drehzahl-Sollwerte bereitstellt. Anhand der Drehzahl-Sollwerte erfolgt vorzugsweise eine Regelung der Drehzahl des Motors.

Vorzugsweise erfolgt in regelmäßigen zeitlichen Abständen eine Variation des Schlupfes. Bei der Variation des Schlupfes wird der Schlupf vorteilhaft um 1% bis 10% erhöht oder verringert. Anhand des verringerten oder erhöhten Schlupf wird vorzugsweise das Drehmoment bestimmt, welches der Motor bereitstellt. Von dem Drehmoment des Motors kann die Kraft bestimmt werden, welche auf den Gurt wirkt.

Anstelle einer Variation des Schlupfes kann auch eine Variation der Drehzahl erfolgen. Hierbei wird vorzugsweise der Drehzahl-Regeleinrichtung ein um 1% bis 10% erhöhter oder verringerter Drehzahl-Sollwert bereitgestellt. Die Drehzahländerung bewirkt vorzugsweise eine Änderung des Schlupfes. Die Kraftdifferenz wird vorzugsweise anhand der Änderung des Drehmoments, welches der Motor bereitstellt, bestimmt.

Die Kraftdifferenz, die Drehzahldifferenz bzw. die Schlupfdifferenz wird ermittelt und der Anstieg bestimmt. Vorzugsweise wird anhand des Anstieges eine Tangente als lineare Approximation der Kennlinie bestimmt.

Vorteilhaft wird ermittelt, ob der Anstieg positiv ist. Bei einem negativen Anstieg wird der Schlupf oder die Drehzahl reduziert und der reduzierte Schlupf oder die reduzierte Drehzahl als Drehzahl-Sollwert der Drehzahl-Regeleinrichtung bereitgestellt.

Die Steuereinrichtung für einen Antrieb, insbesondere einem Antrieb einer Gurtfördereinrichtung (1), weist

- einen Eingang für eine Geschwindigkeit eines Gurtes
- eine Schlupf-Regeleinrichtung,
- eine Schnittstelle zu einer Stromversorgung und
- eine Drehzahl-Regeleinrichtung auf,

wobei die Steuereinrichtung zur Durchführung eines hier beschrieben Verfahrens ausgebildet ist.

Die Steuereinrichtung weist darüber hinaus optional einen Eingang für einen Geber auf. Der Geber dient vorteilhaft zur Bestimmung der Drehzahl des Motors. Die Drehzahl des Motors wird der Drehzahl-Regeleinrichtung bereitgestellt.

Darüber hinaus weist die Steuereinrichtung optional einen Eingang für einen Sensor zur Bestimmung eines Beladungszustandes des Gurtes auf. Ein solcher Sensor kann als Bandwaage ausgebildet sein.

Vorzugsweise stellt die Stromversorgung das Drehmoment, welches der Motor aufbringen muss, der Steuereinrichtung bereit.

Die Steuereinrichtung dient vorzugsweise zur Bestimmung der Kraft aus dem Drehmoment.

Die Steuereinrichtung ist vorzugsweise einer Recheneinheit zugeordnet oder umfasst eine solche Regeleinrichtung.

Die Schlupf-Regeleinrichtung dient vorzugsweise zur Regelung des Schlupfes. Die Drehzahl-Regeleinrichtung dient vorzugsweise zur Drehzahl-Regelung.

Der Schlupf-Regelkreis stellt der Drehzahl-Regeleinrichtung Drehzahl-Sollwerte bereit. Die Drehzahl-Sollwerte werden anhand des Schlupfes bestimmt. Vorzugsweise ist die Drehzahl-Regeleinrichtung einer Stromversorgung des Motors zugeordnet.

Vorzugsweise erfolgt die Bestimmung der Geschwindigkeit des Gurtes mit Hilfe eines Sensors, wobei der Sensor vorteilhaft die Geschwindigkeit des Gurtes der Schlupf-Regeleinrichtung und/oder der Drehzahlregeleinrichtung jeweils als Ist-Wert der Geschwindigkeit bereitstellt.

Vorzugsweise erfolgt die Bestimmung der Kraft, die auf den Gurt übertragen wird, mit Hilfe einer Bestimmung des Drehmoments, welches der Motor bereitstellt.

Vorzugsweise wird die Kennlinie oder die Mehrzahl von Kennlinien in der Steuereinrichtung hinterlegt. Die jeweilige Kennlinie wird für die Regelung des Schlupfes dem Schlupf-Regelkreis bereitgestellt.

Vorzugsweise erfolgt die Steuerung oder Regelung der Drehzahl oder des Schlupfes mit Hilfe der hier beschriebenen Steuereinrichtung autark. Unter einem autarken Betrieb wird verstanden, dass die Steuereinrichtung lediglich mit dem ihr zugeordneten Motor, der ihr zugeordneten Stromversorgung und mit den ihr zugeordneten Sensoren verbunden ist oder kommuniziert.

Das Antriebssystem dient insbesondere für eine Gurtfördereinrichtung. Das Antriebsystem umfasst einen Motor und eine Antriebsrolle, eine Stromversorgung für den Motor, insbesondere einen Frequenzumrichter, sowie eine Steuereinrichtung, wie vorstehend beschrieben.

Vorzugsweise ist dem Antriebssystem ein Sensor zur Bestimmung der Geschwindigkeit des Gurtes zugeordnet. Der Sensor dient vorzugsweise zur Bestimmung der Geschwindigkeit des Gurtes im Bereich der Antriebsrolle. So kann die Geschwindigkeit des Gurtes im Bereich der jeweiligen Antriebsrolle bestimmt werden. Die Geschwindigkeit des Gurtes wird vorzugsweise der Steuereinrichtung bereitgestellt, die zur Steuerung oder Regelung des Motors dient, der mit der Antriebsrolle verbunden ist.

Ein solches Antriebssystem kann vorzugsweise autark betrieben werden.

Das Computerprogrammprodukt ist zur Ausführung auf einer Recheneinheit ausgebildet, wobei das Computerprogrammprodukt zur Ausführung eines hier beschriebenen Verfahrens ausgebildet ist.

Das Computerprogrammprodukt wird zur Ausführung auf eine Recheneinheit installiert und vorzugsweise dort gespeichert. Die Recheneinheit ist vorteilhaft der Steuereinrichtung zugeordnet. Zur Durchführung des Verfahrens wird das Computerprogrammprodukt vorzugsweise in den Arbeitsspeicher der Recheneinheit geladen und dort von einer CPU ausgeführt. Vorzugsweise dient das Verfahren zur Bereitstellung von Drehzahl-Sollwerten an eine Bewegungssteuerung oder an eine Stromversorgung des Motors.

Durch ein hier beschriebenes Computerprogrammprodukt kann das hier beschriebene Verfahren vorteilhaft besonders einfach und mit einer hohen Geschwindigkeit und Genauigkeit ausgeführt werden.

Die Gurtfördereinrichtung weist zumindest ein Antriebssystem gemäß vorangehender Beschreibung oder zumindest eine vorstehend beschriebene Steuereinrichtung auf.

Die Gurtfördereinrichtung umfasst vorteilhaft eine Mehrzahl von Antriebsrollen, die jeweils einem Motor zugeordnet sind. Die Antriebsrollen dienen zum Antrieb des Gurtes der Gurtfördereinrichtung.

Demnach kann eine Gurtfördereinrichtung eine Mehrzahl von Antriebsystemen umfassen. Der Antrieb des Gurtes erfolgt vorteilhaft mit der Mehrheit der Antriebsysteme gleichzeitig.

Vorteilhaft kann eine bestehende Gurtfördereinrichtung mit einem oder mehreren hier beschriebenen Antriebssystemen ausgestattet werden. Hierbei dient das jeweilige Antriebssystem vorteilhaft zum Antrieb einer Tragrolle. Durch einen Antrieb einer oder mehrerer Tragrollen kann das Antriebssystem für eine Gurttrommel vorteilhaft entlastet werden.

Vorzugsweise ist die jeweilige Antriebsrolle jeweils einem Antriebssystem zugeordnet. Vorzugsweise erfolgt der Antrieb der jeweiligen Antriebsrolle mit einem autarken Antriebssystem.

Die Steuereinrichtung umfasst vorzugsweise einen Speicher, wobei der Speicher konstante Parameter, wie dem Radius der jeweiligen Antriebsrolle, technischen Daten des Motors oder eine Vorspannung des Gurtes, aufweist. Darüber hinaus kann der Speicher dynamische Werte, wie die Beladung des Gurtes oder Reibungskoeffizienten zwischen der Antriebsrolle und dem Gurt, aufweisen.

Vorzugsweise wird die Geschwindigkeit des Gurtes mit einem Sensor ermittelt und die Geschwindigkeit der Mehrzahl der Steuereinrichtungen bereitgestellt.

Vorzugsweise umfasst die Steuereinrichtung eine Eingabemöglichkeit für Werte, wie technische Daten der Stromversorgung oder des Motors sowie für den Durchmesser der Mantelfläche der Antriebsrolle.

Vorzugsweise kann die Kennlinie über einen Polynom-Zug mit Anstiegs-Werten approximiert werden, vorzugsweise analog einer Taylor-Entwicklung.

Vorzugsweise ändert sich bei einer Änderung der Beladung des Gurtes der ermittelte Anstieg. Demnach erfolgt vorteilhaft nach Änderung der Beladung eine Regelung auf einen neuen vorteilhaften Anstieg oder auf eine neue Tangente.

Vorzugsweise kann ein hier beschriebenes Antriebssystem autark in einer Gurtfördereinrichtung eingesetzt werden. Darüber hinaus ist bei mechanischen Änderungen mit nur geringem Aufwand eine Anpassung des jeweiligen Antriebssystems möglich.

Vorzugsweise kann bei Ausfall eines Antriebsystems die zur Bewegung des Gurtes notwendige Kraft auf die weiteren Antriebsysteme verteilt werden. Vorzugsweise erfolgt bei Ausfall eines Antriebsystems ein Signal an die weiteren Antriebssysteme der Gurtfördereinrichtung. Bei Empfang des Signals wird vorzugsweise das jeweilige Drehmoment des Motors und/oder der jeweilige Schlupf entsprechend erhöht.

Zusammenfassend betrifft die Erfindung ein Verfahren zur Regelung einer Bewegung einer Antriebsrolle, eine Steuereinrichtung, ein Antriebssystem, eine Gurtfördereinrichtung sowie ein Computerprogrammprodukt. Das Verfahren dient zur Steuerung oder Regelung eines Schlupfes zwischen einer Antriebsrolle und einem Gurt. Vorzugsweise wird eine Kennlinie ermittelt, welche die Abhängigkeit der auf den Gurt übertragenen Kraft in Abhängigkeit von dem Schlupf angibt. Vorzugsweise wird der Schlupf anhand der Kennlinie gesteuert oder geregelt. Zur Verbesserung der Regelung erfolgt eine Regelung auf einen Regelungspunkt für den Schlupf. Darüber hinaus kann die Kennlinie durch eine Variation des Schlupfes einer sich ändernden Beladung angepasst werden, indem der Schlupf variiert wird, anhand der Variation ein Bereich der Kennlinie durch eine Tangente approximiert wird und die Tangente T zur Regelung des Schlupfes herangezogen wird.

Im Folgenden wird die Erfindung anhand von Figuren näher beschrieben und erläutert. Die in den Figuren gezeigten Ausführungsformen sind lediglich beispielhaft und schränken die Erfindung keinesfalls ein.

Es zeigen

FIG 1    ein beispielhaftes Antriebsystem,

FIG 2    ein beispielhaftes Verfahren,

FIG 3    eine Kennlinie sowie

FIG 4    eine beispielhafte Steuereinrichtung.

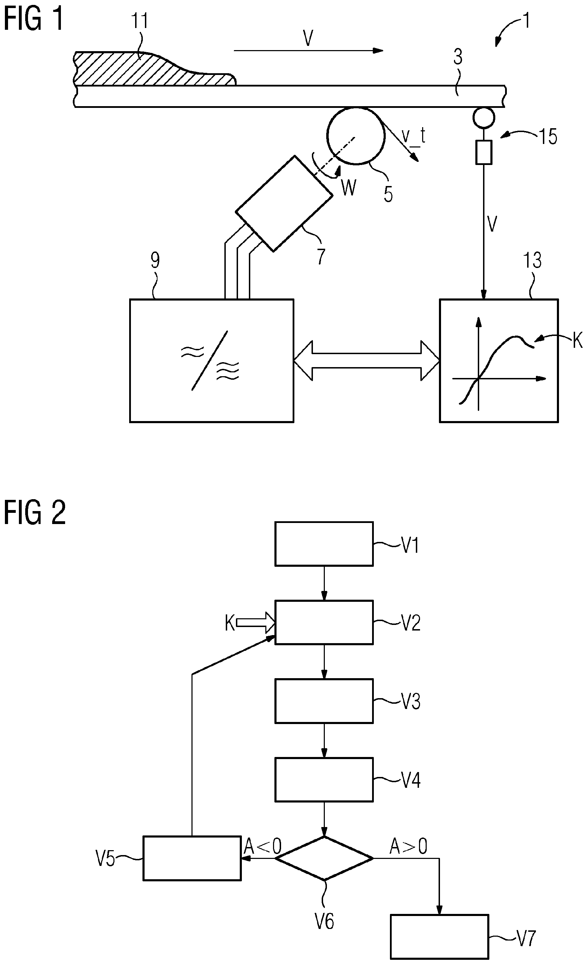

FIG 1 zeigt ein beispielhaftes Antriebssystem. Das Antriebssystem ist vorteilhaft Teil einer Gurtfördereinrichtung 1. Das hier gezeigte Antriebsystem umfasst einen Motor 7, wobei der Motor eine Antriebsrolle 5 antreibt. Die Antriebsrolle 5 beaufschlägt mit ihrer Mantelfläche eine Unterseite eines Gurtes 3. Der Gurt 1 ist Teil der Gurtfördereinrichtung 1. Der Gurt 3 dient zum Transport von Schüttgut 11, wobei das Schüttgut auf dem Gurt 3 liegt.

Der Motor 7 wird von einer Stromversorgung 9 mit elektrischer Energie versorgt. Die Stromversorgung 9 kann als Frequenzumrichter ausgebildet sein.

Der Stromversorgung 9 ist eine Steuereinrichtung 13 zugeordnet. Die Steuereinrichtung 13 dient zur Steuerung der Drehzahl w und/oder des Drehmoments D des Motors 7. Der Steuereinrichtung 13 ist eine Kennlinie K zugeordnet. Anhand der Kennlinie K wird mit Hilfe der Steuereinrichtung 13 ein Schlupf S zwischen der Mantelfläche der Antriebsrolle 5 und der Unterseite des Gurtes 3 eingestellt. Der Schlupf S wird vorteilhaft anhand einer vorgegebenen Kraft F, die auf den Gurt 3 wirkt, mit Hilfe der Kennlinie K gewählt. Vorzugsweise wird die Kraft F auf den Gurt dergestalt gewählt, dass der Gurt 3 mit einer konstanten Geschwindigkeit v bewegt wird.

Die Kraft F, die auf den Gurt 3 wirkt, kann proportional dem Drehmoment D sein, welches der Motor bereitstellt.

Zur Bestimmung der Geschwindigkeit v des Gurtes 3 dient ein Sensor 15, wobei der Sensor 15 die Geschwindigkeit v des Gurtes im Bereich der Antriebsrolle 5 bestimmt.

Zum Antrieb des Gurtes 3 dient die Antriebsrolle 5. Die Antriebsrolle weist an ihrer Mantelfläche eine Tangentialgeschwindigkeit v_t auf. Der Unterschied der Tangentialgeschwindigkeit v_t und der Geschwindigkeit v des Gurtes 1 ist proportional dem Schlupf S zwischen der Antriebsrolle 5 und dem Gurt 3.

FIG 2 zeigt ein beispielhaftes Verfahren. Das Verfahren dient vorzugsweise zur Regelung der Drehzahl w des Motors 7. Der Motor 7 dient vorteilhaft zum Antrieb eines Gurtes 3 einer Gurtfördereinrichtung 1. Mit Hilfe des Verfahrens soll ein möglichst schonender Antrieb des Gurtes 3 erfolgen.

Das Verfahren umfasst die folgenden Schritte:

In einem ersten Verfahrensschritt V1 erfolgt eine Steuerung der Drehzahl w und/oder des Drehmoments D des Motors 7 so, dass ein im Wesentlichen konstanter Schlupf S oder eine im Wesentlichen konstante Geschwindigkeit v des Gurtes 3 eingestellt vorliegt. Der erste Verfahrensschritt V1 kann auch als Anlaufphase bezeichnet werden.

In einem zweiten, optionalen Verfahrensschritt V2 erfolgt die Einstellung des Schlupfes S anhand einer Kennlinie K, wobei die Kennlinie K den berechneten und/oder experimentell ermittelten Schlupf S für eine auf den Gurt 3 wirkende Kraft F angibt. Vorzugsweise wird die Kraft F vorgegeben, die auf den Gurt 3 wirken soll. Alternativ oder zusätzlich wird die Kraft F derart ermittelt, dass die Geschwindigkeit v des Gurtes 3 konstant bleibt. Vorteilhaft wird diese Kraft F eingestellt, die zu einer konstanten Geschwindigkeit v des Gurtes 3 führt.

In einem dritten Verfahrensschritt V3 erfolgt die Variation des Schlupfes S. Bei der Variation des Schlupfes wird beispielsweise die Drehzahl w des Motors 7 um einen kleinen Wert, beispielhaft 5% oder 1% der Drehzahl w, erhöht oder vermindert. Mithin wird der Schlupf S um eine Schlupfdifferenz ΔS erhöht oder vermindert. Beispielsweise mit Hilfe des Drehmoments D des Motors 7 erfolgt die Bestimmung einer Kraftdifferenz ΔF auf Grund der Schlupfdifferenz ΔS.

Vorteilhaft erfolgt die Einstellung der Schlupfdifferenz ΔS derart, dass der Schlupf-Regeleinrichtung RE2 ein, um die Schlupfdifferenz ΔS erhöhten oder verminderten Schlupf S, als Sollwert vorgegeben wird. Anhand des erhöhten oder verminderten Schlupfes S wird eine erhöhte oder verminderte Soll-Drehzahl w soll an eine Drehzahl-Regeleinrichtung RE1 oder an die Stromversorgung 9 des Motors 7 bereitgestellt. Die Kraftdifferenz ΔF wird vorzugsweise anhand des Drehmoments D bestimmt, welches der Motor 7 aufbringen muss, um den Schlupf S zu erhöhen.

In einem vierten Verfahrensschritt V4 erfolgt eine Bestimmung eines Anstieges dF/dS. Der Anstieg dF/dS ist vorzugsweise der Quotient der Kraftdifferenz ΔF mit der Schlupfdifferenz ΔS. Die Bestimmung des Anstieges dF/dS erfolgt vorzugsweise für eine Mehrzahl von Schlupfdifferenzen ΔS. Vorzugsweise erfolgt die Bestimmung des Anstieges dF/dS nach einer Änderung der Beladung des Gurtes 3 mit dem Schüttgut 11.

Aus dem Anstieg dF/dS wird vorzugsweise eine Tangente T ermittelt. Die Tangente T kann durch eine lineare Approximation von einer Mehrzahl von Anstiegen dF/dS ermittelt werden.

Vorteilhaft wird in einem weiteren, optionalen Verfahrensschritt V6 das Vorzeichen (+ oder -) des Anstieges dF/dS ermittelt. Der Anstieg dF/dS ist in der Regel die Steigung der Tangente T.

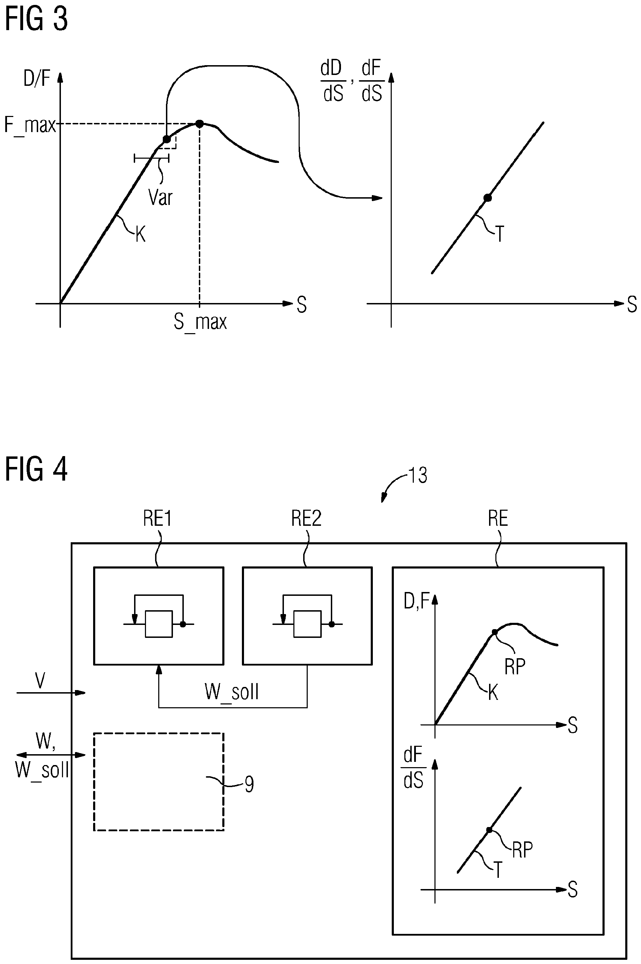

Ist der Anstieg dF/dS negativ, so ist die Drehzahl w des Motors 7 zu hoch. Wie in der in FIG 3 gezeigten Kennlinie K dargestellt, ist eine wirksame Übertragung von Kraft F von der Antriebsrolle 5 auf den Gurt 3 nur für einen geringen Schlupf S möglich. Oberhalb eines maximalen Schlupfes S_max dreht die Antriebsrolle 5 lediglich durch und Gleitreibungseffekte zwischen der Antriebsrolle 5 und dem Gurt 3 überwiegen. Demnach wird bei einem negativen Anstieg dF/dS (kleiner gleich Null) der Schlupf S bzw. die Drehzahl w reduziert. Die Reduktion des Schlupfes S bzw. der Drehzahl w erfolgt in einem fünften Verfahrensschritt V5.

Nach der Reduktion des Schlupfes S bzw. einer Reduktion der Drehzahl w erfolgt vorzugsweise der Übergang zum zweiten Verfahrensschritt V2 oder zum dritten Verfahrensschritt V3.

Durch das in FIG 2 gezeigte Verfahren können mehrere Antriebssysteme autark voneinander betrieben werden.

FIG 3 zeigt eine Kennlinie K. Die Kennlinie K gibt den Zusammenhang zwischen dem Schlupf S und der auf den Gurt übertragene Kraft F an. Die auf den Gurt 3 übertragene Kraft F ist proportional zum Drehmoment D, welches der Motor 7 bereitstellt. Die Kennlinie K zeigt einen im Wesentlichen linear verlaufenden Anstieg dF/dS für niedrige Schlupf-Werte an. Für einen hohen Schlupf S erfolgt ein Rückgang der auf den Gurt übertragenen Kraft K bei steigendem Schlupf S bis zu einem maximalen Schlupf S_max. Bei dem maximalen Schlupf S_max erfolgt die Übertragung einer maximalen Kraft F_max auf den Gurt 3.

Die Variation Var des Schlupfes S bzw. der Drehzahl w des Motors 7 ist durch eine waagrechte Strecke gekennzeichnet. In einem solchen Bereich wird vorteilhaft der Schlupf S erhöht oder vermindert.

Anhand der Schlupfdifferenz und der daraus resultierenden Kraftdifferenz wird der Anstieg dF/dS ermittelt. Der Anstieg dF/dS ist die Steigung des oberhalb der Strecke gezeigten Steigungsdreieckes.

Der Anstieg dF/dS bildet die Grundlage für die daneben gezeigte Tangente T. Die Tangente T weist einen ausgezeichneten Punkt auf, wobei der Punkt den Schlupf S angibt, auf den die Schlupf-Regeleinrichtung den Schlupf S regelt. Vorzugsweise wird der Punkt von einem Benutzer vorgegeben.

FIG 4 zeigt eine beispielhafte Steuereinrichtung 13. Die Steuereinrichtung umfasst Eingänge für die Geschwindigkeit v des Gurtes sowie optional einen Eingang für das Drehmoment D, welches am Motor 7 anliegt.

Die Steuereinrichtung 13 umfasst weiter eine Schlupf-Regeleinrichtung RE2 und eine Drehzahl-Regeleinrichtung RE1. Die Schlupf-Regeleinrichtung stellt der Drehzahl-Regeleinrichtung RE1 Drehzahl-Sollwerte w soll bereit. Die Drehzahl-Regeleinrichtung RE1 kann auch der Stromversorgung 9 des Motors 7 zugeordnet sein.

Weiter ist eine ermittelte oder berechnete Kennlinie K hinterlegt. Vorteilhaft ist die Kennlinie in einem Speicher einer Recheneinheit RE gespeichert. Die Recheneinheit RE dient zur Bestimmung des Anstieges und zur Bereitstellung der Tangente T an die Schlupf-Regeleinrichtung.

Vorzugsweise umfasst die Regeleinrichtung weitere Parameter, wie den Durchmesser der jeweiligen Antriebsrolle, technische Daten des Motors 7 und eine vorliegende Spannung des Gurtes 3. Das gestrichelte Rechteck symbolisiert weitere mögliche Elemente der Steuereinrichtung 13, wie ein Interface, oder eine Schnittstelle zu einem Geber oder zur Stromversorgung 9.

Zusammenfassend betrifft die Erfindung ein Verfahren zur Regelung einer Bewegung einer Antriebsrolle 5, eine Steuereinrichtung 13, ein Antriebssystem, eine Gurtfördereinrichtung 1 sowie ein Computerprogrammprodukt. Das Verfahren dient zur Steuerung oder Regelung eines Schlupfes S zwischen einer Antriebsrolle 5 und einem Gurt 3. Vorzugsweise wird eine Kennlinie K ermittelt, welche die Abhängigkeit der auf den Gurt 3 übertragenen Kraft F in Abhängigkeit von dem Schlupf S angibt. Vorzugsweise wird der Schlupf S anhand der Kennlinie K gesteuert oder geregelt. Zur Verbesserung der Regelung erfolgt eine Regelung auf einen Regelungspunkt RP für den Schlupf S. Darüber hinaus kann die Kennlinie K durch eine Variation des Schlupfes S einer sich ändernden Beladung des Gurtes 3 angepasst werden, indem der Schlupf S variiert wird, anhand der Variation ein Bereich der Kennlinie K durch eine Tangente T approximiert wird und die Tangente T zur Regelung des Schlupfes S herangezogen wird.

**Patentansprüche**

1. Verfahren zur Regelung einer Bewegung einer Gurtantriebsrolle, insbesondere einer Antriebsrolle (5) einer Gurtfördereinrichtung (1), umfassend folgende Schritte:

   - Ermitteln einer Geschwindigkeit (v) eines Gurtes (3),
   - Vorgabe eines Schlupfes (S) zwischen der Antriebsrolle (5) und dem Gurt (3),
   - Vorgabe einer Soll-Drehzahl (w_Soll) an eine Drehzahl-Regeleinrichtung (RE1) für die Antriebsrolle (5) anhand des Schlupfes (S),

   **dadurch gekennzeichnet, dass** der Schlupf (S) anhand einer Kraft (F), die auf den Gurt (3) wirken soll, bestimmt wird.

2. Verfahren nach Anspruch 1, wobei der Schlupf (S) als Funktion der Kraft (F) in einer Kennlinie (K) festgelegt ist.

3. Verfahren nach einem der vorangehenden Ansprüche, wobei die Soll-Drehzahl (w_Soll) mit einer Drehzahldifferenz (Δw) addiert wird und der Drehzahl-Regeleinrichtung (RE1) bereitgestellt wird, wobei anhand der Kraftdifferenz (ΔF), die aufgrund der Drehzahldifferenz (Δw) ermittelt wird, ein Anstieg (dF/dS) bereitgestellt wird.

4. Verfahren nach Anspruch 3, wobei anhand der Drehzahldifferenz (Δw) und der Kraftdifferenz (ΔF) ein Anstieg (dF/dS) ermittelt wird, wobei der Anstieg (dF/dS), insbesondere als Tangente, zur Regelgröße für den Schlupf (S) dient.

5. Verfahren nach einem der vorangehenden Ansprüche, wobei ein Schlupf (S) von 0% bis 5%, insbesondere ein Schlupf (S) von 0,1% bis 1% gewählt wird.

6. Verfahren nach einem der vorangehenden Ansprüche, wobei eine Regelung des Schlupfes (S) anhand einer tangentialen Approximation des Anstieges (dF/dS) erfolgt.

7. Verfahren nach einem der Ansprüche 3 bis 6, wobei die Drehzahl (w) und/oder der Schlupf (S) reduziert wird, falls der Anstieg (dF/dS) einen negativen Wert annimmt.

8. Verfahren nach einem der vorangehenden Ansprüche, wobei erst nach einer Anlaufphase, insbesondere nachdem die Geschwindigkeit (v) des Gurtes (3) sich nicht mehr ändert oder nicht mehr wesentlich ändert, eine Regelung des Schlupfes (S) erfolgt.

9. Verfahren nach einem der Ansprüche 3 bis 8, wobei anhand der Bestimmung des Anstieges die Kennlinie modifiziert wird.

10. Steuereinrichtung (13) für einen Antrieb, insbesondere einem Antrieb einer Gurtfördereinrichtung (1), aufweisend

   - einen Eingang zur Bereitstellung einer Geschwindigkeit (v) eines Gurtes (3),
   - eine Schlupf-Regeleinrichtung (RE2),
   - eine Schnittstelle zur Verbindung mit einer Stromversorgung (9),
   - eine Drehzahl-Regeleinrichtung (RE1),

   wobei die Steuereinrichtung (13) zur Durchführung eines Verfahrens nach einem der vorangehenden Ansprüche ausgebildet ist.

11. Antriebssystem, insbesondere für eine Gurtfördereinrichtung (1), aufweisend einen Motor (7) und eine Antriebsrolle (5), eine Stromversorgung (9) für den Motor (7), insbesondere einen Frequenzumrichter, sowie eine Steuereinrichtung (13) nach Anspruch 10.

12. Computerprogrammprodukt zur Ausführung auf einer Recheneinheit, wobei das Computerprogrammprodukt zur Ausführung eines Verfahrens nach einem der Ansprüche 1 bis 8 ausgebildet ist.

13. Gurtfördereinrichtung (1), aufweisend zumindest ein Antriebssystem nach Anspruch 10 oder eine Steuereinrichtung (13) nach Anspruch 9.

FIG 1

FIG 2

## FIG 3

## FIG 4

Europäisches
Patentamt

European
Patent Office

Office européen
des brevets

# EUROPÄISCHER RECHERCHENBERICHT

Nummer der Anmeldung

EP 18 19 7707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 107591 A1 (ARTUR KÜPPER GMBH & CO KG [DE]) 3. Dezember 2015 (2015-12-03) * Absatz [0032] - Absatz [0067]; Ansprüche; Abbildungen * ----- | 1-13 | INV. B65G43/00 ADD. B65G23/32 B65G43/04 |
| X | DE 297 07 246 U1 (SIEMENS AG [DE]; LAUSITZER BRAUNKOHLE AG [DE]) 3. Juli 1997 (1997-07-03) * Seite 4, Zeile 1 - Seite 9, Zeile 8; Ansprüche; Abbildungen * ----- | 1,10-13 | |
| X | DE 197 16 907 A1 (SIEMENS AG [DE]; LAUSITZER BRAUNKOHLE AG [DE]) 5. November 1998 (1998-11-05) * Seite 1 - Seite 4; Ansprüche; Abbildungen * ----- | 1,10-13 | |
| A | US 2 782 902 A (SLOANE WILLIAM W) 26. Februar 1957 (1957-02-26) * das ganze Dokument * ----- | 1 | |

| | RECHERCHIERTE SACHGEBIETE (IPC) |
|---|---|
| | B65G |

Der vorliegende Recherchenbericht wurde für alle Patentansprüche erstellt

| Recherchenort | Abschlußdatum der Recherche | Prüfer |
|---|---|---|
| Den Haag | 20. März 2019 | Hoffert, Rudi |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 7707

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2019

| Im Recherchenbericht angeführtes Patentdokument | Datum der Veröffentlichung | Mitglied(er) der Patentfamilie | Datum der Veröffentlichung |
|---|---|---|---|
| DE 102014107591 A1 | 03-12-2015 | DE 102014107591 A1<br>WO 2015181309 A1 | 03-12-2015<br>03-12-2015 |
| DE 29707246 U1 | 03-07-1997 | KEINE | |
| DE 19716907 A1 | 05-11-1998 | AU 7756498 A<br>CA 2287263 A1<br>DE 19716907 A1<br>DE 19829020 A1<br>DE 19880507 D2<br>WO 9847794 A1<br>ZA 9803285 B | 13-11-1998<br>29-10-1998<br>05-11-1998<br>05-01-2000<br>13-01-2000<br>29-10-1998<br>22-10-1998 |
| US 2782902 A | 26-02-1957 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012102945 A1
- EP 18156029 A